# EUROPEAN PATENT APPLICATION

(11) **EP 0 738 945 A2**
(43) Date of publication of application: **23.10.1996**
(21) Application number: 96610016.6
(22) Date of filing: 22.04.1996
(51) Int. Cl.: G05B 19/19

(54) **Rack**

(30) Priority: 21.04.1995 DK 470/95
(71) Applicant: GEMO 1991 APS, 2979 Horsholm (DK)
(72) Inventor: Bech, Mogens Ilsted, 3460 Birkerod (DK); Ronne, Gert Steen, 2980 Kokkedal (DK)
(74) Representative: Blichfeldt, Mogens Erhardt

(57) **Abstract**

Providing self compensation as when external forces influence on the controlled object, as when turning wheel chair seats (S), and comprising at least two sets of control providing position signals each composed of at least two positioning controlling signals:
a. having one of these sets, at 2-dimensional position control, comprising at least two with the object associated position locating signal components (a1, a2), and
b. another of these signal sets comprising at least two signal components (b1, b2) for the movable object hereto corresponding, the aimed object position, if reached with the aimed moving velocity, locating and of the aimed velocity size dependent signal components (b1, b2), whereby to attain self compensation:
c. a coupling device with at least two sets of coupling providing members (c1 and OUT=IN, c2 and OUT=IN) is provided substantially to substitute:
d. respectively one of the at least two individual signal sets that is associated with the at least two with the object position assiociated position locating signal components (e1, e2) with
e. the corresponding respective of the at least two to the object hereto corresponding, the aimed object position, if reached with the aimed moving velocity, locating and thus of the aimed velocity size dependent signal components (d1, d2 based upon and in illustrated embodiment identical with a1, a2).

## Description

The present invention relates to a self correcting arrangement for providing self compensation within an operating position servo, such as in case of occurring of exertion of external forceful influences, in particular during the start-up face of the position servo, respectively at the occurrence of external forceful influences which overpower the controlling force provided by the position servo, and in particular when the object controlled by the servo presents a strong inertial load, such as at position servos employed for the turning of wheel chair seats, and whereby the position servo is of the kind which within the servo circuitry comprises at least two sets of control providing position signals having each individual of these sets of control providing position signals composed of at least two positioning controlling signals, whereby:
a. one of these sets of control providing position signals, corresponding to at least 2-dimensional position control provided through the servo, comprises at least two with the position of the controlled object associated position locating signal components, and whereby
b. another one of these sets of positioning controlling signals comprises at least two signal components which are for the controlled movable object hereto corresponding, the aimed position of the object, if reached with the aimed velocity of moving, locating and thus of the aimed size of velocity dependent signal components.

Such a kind of aiding servo mechanism may advantageously be employed in association with position servos in particular serving to turn rotary wheelchair seats because in part the moment of inertia of the mass to be turned is strongly varying in size lying within limits being relatively wide apart such as being dependent on the seat is either empty or is occupied carrying either a small or a heavy person seated in the chair, or in part because besides the influence from the moment of inertia an external power is exerted being caused by an external obstacle or by an external power influencing in particular with a counterturning influence on the seat, such as in case when while driving the wheelchair is driving against a solid object, or in case a helper is trying to counterturn the seat to ease the passing of the wheelchair through an area of congested nature or to help with the manoeuvering of the wheel chair to bring it in position along a bed, etc. Also in many other situations when controlling the orientation of the chair through steering the driving wheels the presence of a self correcting or self compensating servomechanism may be advantageous.

The abovementioned facts and particulars thus present a substantial number of purposes for employing a self correcting or self compensating position servomechanism, but, another and essential primary reason for the employing is to be found at practically every start-up phase of the servosystem determined for this kind of use as for achieving a self correction or within the positionservo itself as to provide a self defining of in particular the momentarily working position which existed just before the initiation of the start-up (powering-up) phase took place.

In WO 93/20791 a position servo mechanism for wheel chairs, and in particular for wheel chairs with rotary supported seats, is described. Through this international publication a position servomechanism for the chair in general being attained through direct absolute steering of the direction of driving as of the bearing orientation of the seat is described. The seat itself may furthermore be arranged able to be turned in relation to the supporting chassis as by means of a seat turning servomechanism being controlled through a rotary knob.

The self correcting device according to the present invention can be employed as an additional unitary device being able to be inserted as a serial element within the abovementioned servo mechanism of prior art serving for driving and directional steering of a wheelchair seat.

To here describe the present invention, which it is possible to employ in association with other and parallel as corresponding purposes associated with servo controlled objects than just only in association with wheelchairs, it has been chosen to refer to the employing of the invention in connection with a servomechanism which serves to turn a wheelchair seat.

As follows it is also described where in association with a servomechanism of the kind described through the abovementioned international publication a self correcting or self compensating devise according to the present invention, as by way of example, being shaped as a series element can be inserted.

According to the present invention a structural solution can be provided as disclosed in the characterizing portion of claim 1.

It is thus according to the present invention contemplated that such a self correcting device, or equally in this context synonymously expressed such a self compensating device, during the time of the power-up phase in a more or less automated manner is being kept coupled into the servo circuitry, and after the ending of the power-up phase the device in a more or less automated manner only then is coupled again into operational condition in the servo circuitry when by way of example a monitoring of the actual energy supply to the drive means controlled by the servomechanism indicates that the energy supply to the drive means exceeds an acceptable limit. This acceptable limit could furthermore in itself be arranged as a limit it is possible to select such as according to the actual conditions of operation existing within the environments. In such cases the self correcting device according to the invention, as described above, remains coupled into the circuit to the as described wanted self correction is attained, and after the attaining hereof the self correcting device is again switched out of the circuitry, etc.

In practice the most simple and thereby also the economically often most advantageous solution according to the invention can be characterized thereby that, comprised in the individual at least two said signal sets, at least two to the position of the controlled object position associated locating signal components and furthermore at least two, correspondingly respective to the aimed velocity of moving of the controlled object associated and the size of the moving velocity determining signal components are being present as mutually conjugated signal components.

Hereby a further simplified solution according to the invention can be provided through embodiments characterized in that the drive signal serving for the driving of the, for the controlled object provided, controlling drive means of the position servo is being formed through a difference signal building forming the difference between multiplied individual signals being sets of signals provided through multiplying of:
A. one of the said position locating signals and
B. one in time running integrated signal through running integrating the hereto corresponding, to the moving velocity of the controlled object associated the size of the velocity determining signal.

The self correcting device according to the invention can in a simple manner be further modified so that a minimum force always is being outputted from the drive means controlled by the servomechanism, i.e. so that a moving of this means against the influence of the initial friction forces of moment always is assured, namely characterized in that the drive signal for the driving of the for the controlled object provided controlling drive means of the position servo furthermore to the providing of a minimum of driving force provided by the controlling drive means simultaneously is composed as being provided with a with a suitable constant amplified vectorial signal which includes all at the moment for the controlling drive means active for the providing of the aimed moving velocity of the controlled object being connected with and the size of the velocity determining signals.

The embodiments may furthermore in per se known manner be arranged in association with suitably adapted PID-steering of the drive means controlled by the servomechanism according to the invention when the said difference signal building furthermore comprises an in time running integrating of the signal being valid for at least a portion of the builded difference signal.

Respectively in case of embodiments as these self correcting devices according to the invention achieved in that that at the element comprising the at least one of the said in time running signal integrating in parallel with the signal integrating at least one operating amplifying stage is arranged amplifying the signal to be integrated with a constant of amplifying and being connected so that the hereof resulting amplified signal through signal adding means is added to the integrated signal.

An embodiment of a self correcting device according to the invention being able to be employed in relation to a turning mechanism for a seat which is held rotary supported on a wheel chair is, by way of example, described in more details as follows under reference to the drawing, in which:
- Fig. 1: schematically through a block diagram illustrates the principle structure of such a seat turning mechanism, and
- Fig. 2: shows further features able to be employed in association with such a servo mechanism.

Elements shown in the drawing which serve the same or serve a corresponding function are indicated through the same sign of reference.

A wheel chair seat S is shown as being driven through a suitable gear SG from a drive means M which is controlled by a position servo mechanism making the seat capable of being turned an unlimited times of 360° degrees. A seat shaft is, for instance mechanically, connected to an angle encoder encoding the turning angle of the seat, i.e. encoding the position angle θₛ of the seat, thereby providing a set of signals a1, a2. As shown this signal set may as particularly simple be provided as composed of two conjugated signal components respectively shown as sin θₛ and cos θₛ. In practice these signal components have to exhibit amplitudes of voltage. To simplify it is contemplated that all signals being present in the servo circuitry, and thus in particular at places where signals are being mutually combined, and as in a simple manner in practice achievable and in the present case of a possible exemplified embodiment it is also easy to arrange, have the signal amplitude sizes brought mutually, i.e. relationally, to imply such amplitude values that the signals at the signal stages in the circuitry, where indicated through the drawing, simply can be regarded as having relationally the in principle simple amplitudes values "sin" and "cos".

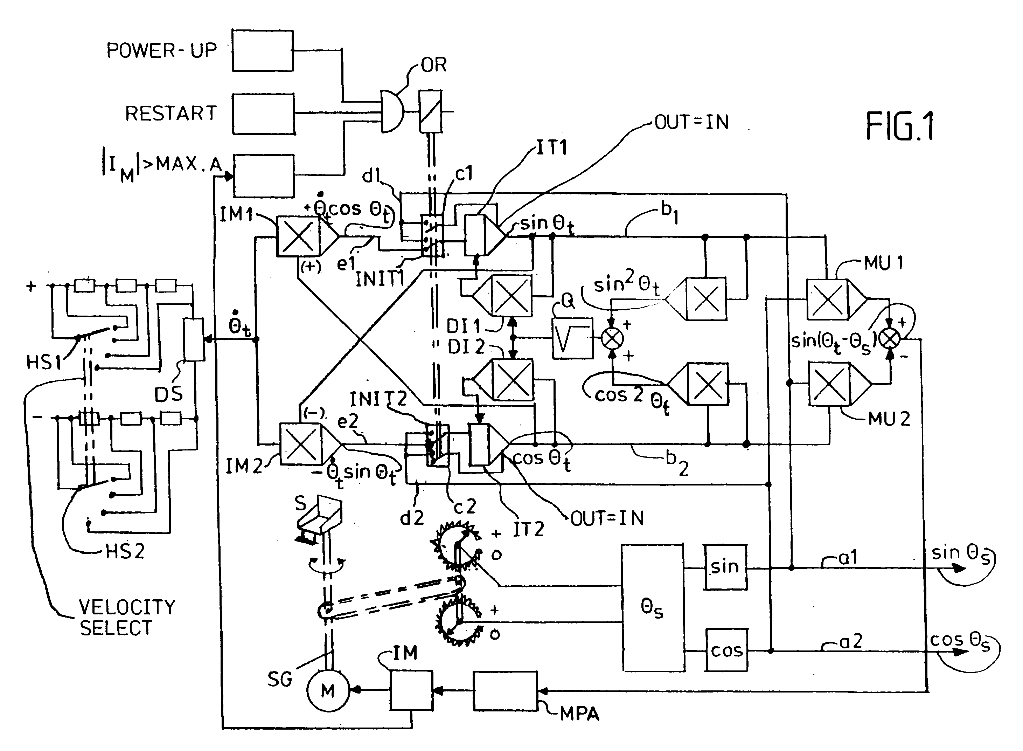

By way of example, an embodiment of an angle encoder for the seat angle θₛ is shown in Fig. 1. Mechanically, the seat shaft is shown to provide simultaneous rotation of two, through an angle of 180° mutually displaced, rotary potentiometer arms. These arms are shown as being comprised within two circularly shaped individual potentiometers and these arms are outputting two momentarily DC-voltages which, as illustrated schematically with block θₛ, simply are converting these DC-voltages to be present in shape of two conjugated signal components a1 and a2, which relationally are adjusted so they can be referred to as respectively sin θₛ and cos θₛ, and which signal components separately, and thus individually, in part are connected to two multiplying stages MU1 and MU2 and in part similarly also are connected to two coupling devices c1 and c2.

To these two multiplying stages MU1 and MU2 two other signals b1 and b2 which signals are also supplied and, as described in further details later, serve to indicate the position which it is the aim to attain with an aimed velocity of rotation of the seat S. The output signals from the two multiplying stages MU1 and MU2 are mutually subtracted, and the hereof resulting signal, being referred to with sin (θₜ - θₛ), is connected to a driving power for the drive means M providing suitable power amplifying and drive power providing device MPA. The output signal from the device MPA is, through a by way example drive power monitoring stage, connected to the drive means M to provide the turning of the seat S.

The abovementioned signals bl and b2 are by way of example referred to with respectively sin θₜ and cos θₜ, and by way of example they may be generated as follows.

The seat S of the wheel chair may be activated to rotate by means of a rotary or turning knob DS which can be of the kind by which the rotary deflection of the knob DS, being deflectable to one side or the other, determines the size of the turning velocity of the seat. As a safety measure against thereby attaining a too large turning velocity of the seat a further selecting key device HS1, HS2 may be comprised. By means of this further selecting key device the maximum of turning velocity of the seat which is attainable through maximum deflection of the turning knob DS can be separately selected. It is easily contemplated that other combinations of controlling knobs for the turning of the seat easily can be employed, nevertheless, from an operational point of view such combinations in operation in general can be contemplated in somehow sufficient measure approximately to be thus reducible in structure that they can be regarded as being explained respectively explanable through the illustrated embodiment.

At the left hand side of Fig. 1, by way of example, a for four selectable velocity sizes structured key device HS1, HS2 is shown serving to select four turning velocities of the seat and thus serves to voltage supply a turning knob potentiometer DS with four selectable sizes of supply voltages. The turning knob potentiometer DS is by means of in the drawing not shown spring means mechanically maintained in mid-position whenever inactivated. When occupying mid-position the output signal voltage from the turning knob potentiometer DS is zero, and when being deflected for activation to one side or the other a to the size of the deflection corresponding positive or negative signal voltage θₜ is generated. The generated output voltage thus just corresponds effectively to the aimed velocity size.

This output signal voltage is by a circuitry as shown transformed into two signals which when the position being aimed at is attained through the course of the aimed size of velocity indicate the aimed position and are being presented as b1 = "sin" and b2 = "cos". Thus, these signals, to be regarded as signal components, are valid for the position whenever it is attainable through a course of movings given at the single moments of the course of movings through signal θₜ , and which signal thus, with the selected embodiment of it, could exist as being produced in shape of a varying signal presented as a compound comprising a sequence of large or small activating deflections such as being generated by sequentially making (different) turning deflections of the activating turning knob DS.

The circuitry should be easy to understand. Through the signs of reference (+) and (-) arranged at the first multiplying stages IM1 and IM2 it is indicated that the single signals have to be connected to either the "+" or the "-" input of the stages. At the illustrated embodiment it is also the intention that the size of amplifying by means of the individual corresponding stages in the course of the two paths through the circuitry serving to build the respective signals or signal components bl and b2 relatively, at least substantially, are of equal size. Through the course of the paths through the circuitry further on to the multiplying stages IM1 and IM2 the following is comprised: In part change-over stages INIT1 and INIT2 also being referred to by cl and c2, whereby, substituting, a self correcting signal or what should be the same a self compensating signal can be coupled into the circuitry as to be described in more details as follows, and in part running integrating stages IT1 and IT2 which from stages of dividing, generally as symbolically indicated in the drawing though multiplying, DI1 and DI2 receive a common signal with such a size that the relative signal value is "1" being acquired as from the sum of the square of the sin and cos signals sin² θₜ og cos² θₜ being received as from a square root forming stage Q for this sum signal. The stage Q thus is arranged to be in common for the two signal course paths existing within the circuitry.

This servocircuitry is going to function in a perfect manner to achieve the purpose, but there exists the danger that either the mutual adaptation between the signals bl, b2 and al, a2 which may be regarded as signal components during the power-up phase of the servo circuitry is not good enough so that the seat S might perform unintentional turning movings through the power-up phase, or that powerful eigen-oscillations may be generated whenever the seat is exposed to any external powerful influencing forces exerted on the seat or during the first power-up of the circuitry, or in the case that the circuit has been subject to be energized with an unduly low battery voltage or the like when operating the wheeled chair and a fresh power-up is being tried under such conditions. On the other hand, experiments with the circuitry have shown that also in case no unintended eigen-oscillations of the seat S result then nevertheless the motor supply current may be unduly augmented leading to a degrading of the performance of the chair, in particular when the drive means M is an electric motor.

According to the invention a monitoring stage IM is inserted for the purpose to detect strong current increases to such a motor. If the current increases above a cer-tain limit the monitoring stage IN activates the two change-over stages INIT1 and INIT2 which also are referred to as c1 and c2, so that the two signals al and a2 or signal components in stead of the signals which arrive from the multiplying stages IM1 and IM2 which receive signal from the turning knob DS are connected to the inputs on the operating running integrating stages IT1 and IT2 and also simultaneously are further connected to the running integrating stages IT1 and IT2 in such a manner that the output signals from these stages are made equal to the supplied input signals, in particular the signals dl and d2, which in the drawing by way of example is referred to with the indicated references OUT=IN. In this manner, the output signals b1 and b2 issuing from the two course of paths through the circuitry are forced to attain such corresponding "sin" and "cos" values that the current of the seat drive means is regulated to zero value. As result of the change-over the resulting "cos" and "sin" signals being present on the inputs (+) and (-) on the multiplying stages IM1 and IM2 in the course of the paths through the circuitry the current to the motor remains having zero value if, after a changing back to again having the multiplying stages IM1 and IM2 operating, which thus is being achieved by a changing back of the stages INIT1 and INIT2 also referred to as c1 and c2, the seat turning activating turning knob DS is occupying mid-position, or alternatively it is safeguarded that the signals or signal components b1 and b2 are brought to achieve running integrated "sin" and "cos" values which correspond in size "correctly" with the size of deflection that the seat turning activating turning knob DS occupies when being deflected away from its mid-position. In case an external mechanical force influence still is exerted on the seat or is brought to influence upon the seat it is in this manner achieved that in case the motor current again attains a too large size a self-correcting or self-compensating of the circuitry as described above is brought to operate by means of the described change-over facility.

If opposite, under very special circumstances it should be wanted that an extra forceful turning of the seat is to be performed using the drive means M to perform this, and in which case a temporary overloading of the motor is accepted, it is proposed, that a separately activated and through a timing device controlled element, as an option, could be arranged thus being able temporarily to switch off the portion of the servo circuitry which is shown as the monitoring stage IM.

During power-up or when restarting the servo circuitry the power-up devices eventually any restarting devices belonging to the circuitry or eventually some mechanical elements which belong to the servo mechanism could be arranged to provide a corresponding change-over at the stages INIT1 and INIT2 also referred to as c1 and c2 to take place so that the current to the seat turning drive means M is maintained equal to zero during this particular phase of operation. When the power-up or re-starting procedure is finished the running integrating stages INIT1 and INIT2 also referred to as c1 and c2 again should be arranged to be changed back to be put in operation together with the multiplying stages IM1 and IM2, and then hereupon the seat turning activating turning knob DS is ready to be actively operated.

If it is wanted that the seat S is let completely free to be freely turned without any influence from the drive means M, it can be contemplated to achieve this by arranging a change-over at the stages INIT1 and INIT2 to take place to occupy a coupling condition just as the one being used when the servo circuitry is being powered-up.

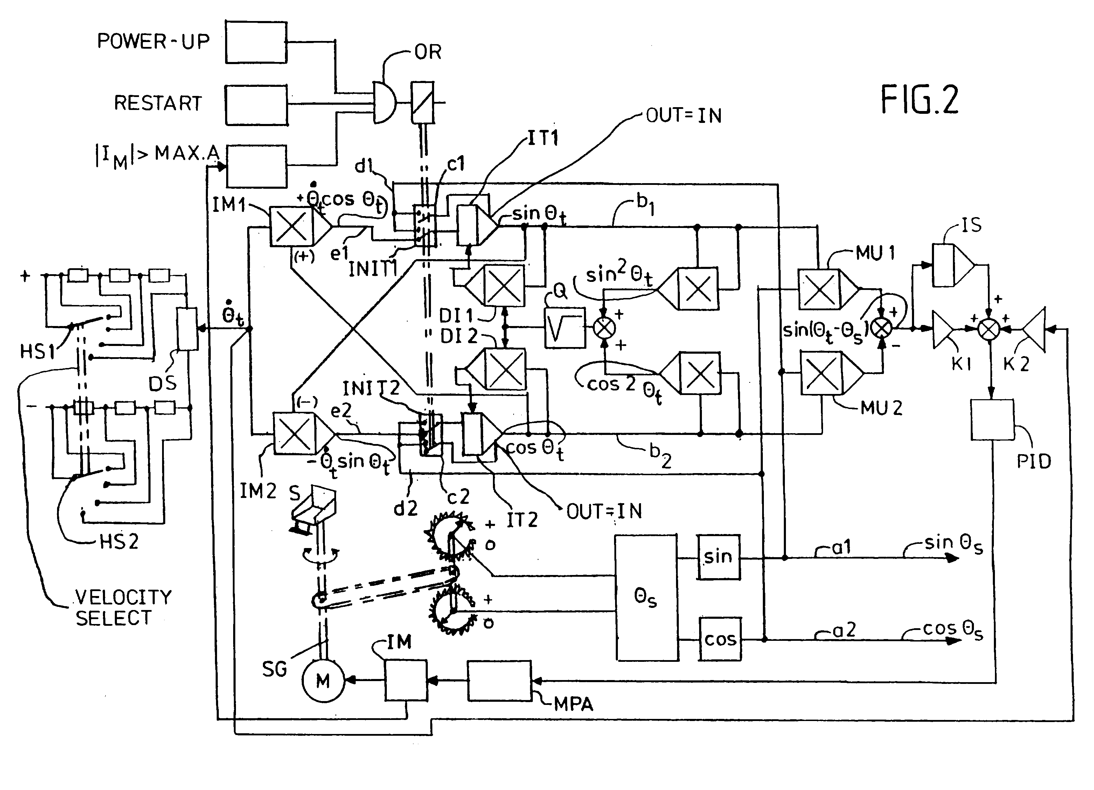

A corresponding embodiment is illustrated in Fig. 2 of the drawing. At this embodiment per se known servo circuit elements IS, K1, K2 and PID are added, i.e. in shape of running integrating stages, of signal amplifying stages providing amplifyings K1 and K2 and of proportional-integrating-differentiating stages all being employed in per se known manner to achieve the movings of the seat to take place in comfortable manner.

The amplifying stage K2 serves to direct supply of a contributing signal being dependent on the velocity signal θₜ to the drive means control member MPA and safeguard that the drive means motor M always, while driving, yields a certain minimum of driving power.

A similar corresponding embodiment for providing an adaptation of the velocity to the moving to take place could also be contemplated to be added as a feature to the servo circuitry and thus serving, in the manner as achieved by means of the present servo circuitry, to control the supporting drive wheels of a wheel chair, such as in the case when the wheel chair is supported by several, in particular smaller and equally sized, supporting drive wheels, which wheels for changing the orientation of driving all are being arranged to be steered equally and simultaneously. As aforementioned, a servo circuitry for such a wheel chair is disclosed through WO 93/20791. At this servo circuitry of prior art the steering of the drive wheels also is being provided by means of a signal composed of "sin" and "cos" values and by which the size of the signal is made proportional to the wanted steering speed. This signal of prior art could easily be contemplated to be connectible to the left hand side of the first multiplying stages IM1 and IM2, which are illustrated in Fig. 1 and Fig. 2 of the present drawing, and in stead of these stages which in the drawing are shown connected for the control of a seat turning drive motor M they would have to be connected to a servo motor of a position servo serving to steer the orientation of the drive wheels. In such case it is though not necessary to arrange such connections, as those described according to the prior art, serving to employ a difference providing stage used to provide the motor steering signal. Subsidiary, another type of easily contemplated connecting-together may be employed being better adapted to serve the steering purpose, such as to employ a multiplying feature with a multiplying factor equal to 2, etc.

According to Fig. 1 of the present drawing a selecting key device employing four selectable maximum velocity sizes is illustrated. As an alternative, a further steering could be employed, possibly being of continuous nature, serving simultaneously with DS to determine the maximum velocity size, but being made as a function of time providing a change of size per unit of time of the positional signal arriving from the position angle encoder. In this manner a controlling of the acceleration of the moving is achieved, so that this, when starting the turning, is high and thereafter changes so that further changings of velocity take place with other sizes of acceleration, respectively that the sizes of the deceleration are being adapted in any equal manner. When a change-over to the operation of the self-correcting or self-compensating feature according to the invention takes place it is simultaneously when employing such a further arrangement achieved that a total "first-beginning" takes place when a turning of the seat is provided by means of the drive means motor which thus is controlled by means of the self-correcting device according to the invention. This solution may be regarded as a very advantageous solution being able to be achieved by means of the present invention.

It can be added, that one or more elements comprised within the self-correcting device featured according to the invention in practice can be provided by means of or be provided through elements which are based on microprocessor technics.

## Claims

1. Self correcting arrangement for providing self compensation within an operating position servo, such as in case of occurring of exertion of external forcing influences, in particular during the start-up face of the position servo, respectively at the occurrence of external forceful influences which overpower the controlling force provided by the position servo, and in particular when the object controlled by the servo presents a strong inertial load, such as at position servos employed for the turning of wheel chair seats (S), and whereby the position servo is of the kind which within the servo circuitry comprises at least two sets of control providing position signals having each individual of these sets of control providing position signals composed of at least two positioning controlling signals, whereby:
a. one of these sets of control providing position signals, corresponding to at least 2-dimensional position control provided through the servo, comprises at least two with the position of the controlled object associated position locating signal components (a1, a2), and whereby
b. another one of these sets of positioning controlling signals comprises at least two signal components (b1, b2) which are for the controlled movable object hereto corresponding, the aimed position of the object, if reached with the aimed velocity of moving, locating and thus of the aimed size of velocity dependent signal components (b1, b2),
**characterized in that**, the servo circuitry for the achieving of self compensation is associated as follows with
c. a coupling device comprising at least two set of coupling providing members (c1 and OUT=IN, c2 and OUT=IN) respectively being substantially provided
for substituting
d. respectively one of the at least two individual sets of controlling signals being associated with the at least two with the position of the controlled object associated position locating signal components (e1, e2)
with
e. the corresponding respective of the at least two to the controlled object hereto corresponding, the aimed position of the object, if reached with the aimed velocity of moving, locating and thus of the aimed size of velocity dependent signal components (d1, d2 based upon and in the shown embodiment illustrated identical with the said: a1, a2).

2. Self correcting device according to claim 1 **characterized in that**, that, comprised in the individual at least two said signal sets, at least two to the position of the controlled object position associated locating signal components and furthermore at least two, corresponding respective to the aimed velocity of moving of the controlled object connected and the size of the moving velocity determining signal components are being present as mutually conjugated signal components.
***???:
within the individual at least two sets comprising to the position of the controlled object connected position locating signal components and furthermore within the at least two, correspondingly respective to the aimed velocity of moving of the controlled object connected and the size of the moving velocity determining signal components are being present as mutually conjugated signal components.
???***

3. Self correcting device according to claim 1 or 2 **characterized in that**, the drive signal serving for the driving of the, for the controlled object provided, controlling drive means of the position servo is being formed through a difference signal building forming the difference between multiplied individual signals being sets of signals provided through multiplying of:
A. one of the said position locating signals and
B. one in time running integrated signal through running integrating the hereto corresponding, to the moving velocity of the controlled object associated the size of the velocity determining signal.

4. Self correcting device according to claim 1, 2 or 3 **characterized in that**, the drive signal for the driving of the for the controlled object provided controlling drive means of the position servo furthermore to the providing of a minimum of driving force provided by tne controlling drive means simultaneously is composed as being provided with a with a suitable constant amplified vectorial signal which includes all at the moment for the controlling drive means active for the providing of the aimed moving velocity of the controlled object being connected with and the size of the velocity determining signals.

5. Self correcting device according to claim 2, 3 or 4 **characterized in that**, the said difference signal building furthermore comprises an in time running integrating of the signal being valid for at least a portion of the builded difference signal.

6. Self correcting device according to claim 5 **characterized in that**, at the element comprising the at least one of the said in time running signal integrating in parallel with the signal integrating at least one operating amplifying stage is arranged amplifying the signal to be integrated with a constant of amplifying and being connected so that the hereof resulting amplified signal through signal adding means is added to the integrated signal.
